# EUROPÄISCHE PATENTANMELDUNG

(11) **EP 0 817 449 A2**
(43) Veröffentlichungstag der Anmeldung: **07.01.1998**
(21) Anmeldenummer: 97107013.1
(22) Anmeldetag: 28.04.1997
(51) Int. Cl.: H04M 1/02

(54) **Modulares Kommunikations-Endgerät**

(30) Priorität: 25.06.1996 DE 19625368
(71) Anmelder: DeTeWe - Deutsche Telephonwerke Aktiengesellschaft & Co., 10997 Berlin (DE)
(72) Erfinder: Romahn, Jörg, 12353 Berlin (DE)

(57) **Zusammenfassung**

Ein Kommunikations-Endgerät weist an in seinem Gehäuse untergebrachten Leiterplatten Steckelemente zum Anschluß steckbarer Module zur Funktions- und Komforterweiterung auf, wobei das Gehäuse (10) des Kommunikations-Endgerätes mit austauschbaren Abdeckungen (13) ausgestattet ist und die steckbaren Module (14) gleichen in ihrer äußeren Gestalt denen der Abdeckungen (13). Die Module (14) sind anstelle der Abdeckungen (13), die vorzugsweise im oberen, rückwärtigen Bereich des Gehäuses (10) angeordnet sind, in die Kontur des Gehäuses (10) einsetzbar.

## Beschreibung

Die Erfindung betrifft ein Kommunikations-Endgerät mit in seinem Gehäuse untergebrachten Leiterplatten mit Steckelementen zum Anschluß steckbarer Module zur Funktions- und Komforterweiterung.

Es ist bekannt, Kommunikations-Endgeräte durch steckbare Module zu erweitern. Dabei werden Module aneinander gereiht oder als Kreissegmente miteinander gekoppelt (DE 44 08 390 ). Diese Anordnungen erfordern einen relativ hohen Platzaufwand. Außerdem sind bei Endgeräten, an die nachträglich mehrere Module steckbar sind, ggf. zusätzliche Vorleistungen für Tastaturen und Anzeigemittel zu erbringen, die u.U. nicht genutzt werden.

Der Erfindung lag die Aufgabe zugrunde, ein mittels Module nachträglich erweiterbares Kommunikations-Endgerät zu schaffen, das beim Stecken von Modulen seine äußeren Abmessungen praktisch nicht verändert und keine Vorleistungen hinsichtlich der Tastatur und der Anzeigemittel erfordert.

Diese Aufgabe ist durch die Erfindung gelöst, wie sie im Kennzeichnungsteil des ersten Patentanspruches dargelegt ist. Weitere vorteilhafte Maßnahmen sind Gegenstand der Unteransprüche.

Die Erfindung wird nachfolgend anhand einer aus zwei Figuren bestehenden Zeichnung näher erläutert. Darin zeigen die
Fig. 1 das Gehäuse eines Kommunikations-Endgerätes und die
Fig. 2 das Beispiel eines steckbaren Moduls.

Das Gehäuse 10 eines Kommunikations-Endgerätes gemäß der Erfindung ist im oberen, rückwärtigen Bereich mit austauschbaren Abdeckungen 13 ausgestattet. Eine oder mehrere Leiterplatten 11 tragen auf einer Seite die Bedienungs- und Anzeigeelemente und auf der anderen Seite die elektrischen Bauelemente. Weiterhin weist die Leiterplatte 11 Steckelemente 12 für eine direkte oder eine indirekte Steckverbindung mit Modulen auf. Diese Steckelemente 12 sind vorzugsweise auf die Abdeckungen 13 hin ausgerichtet.

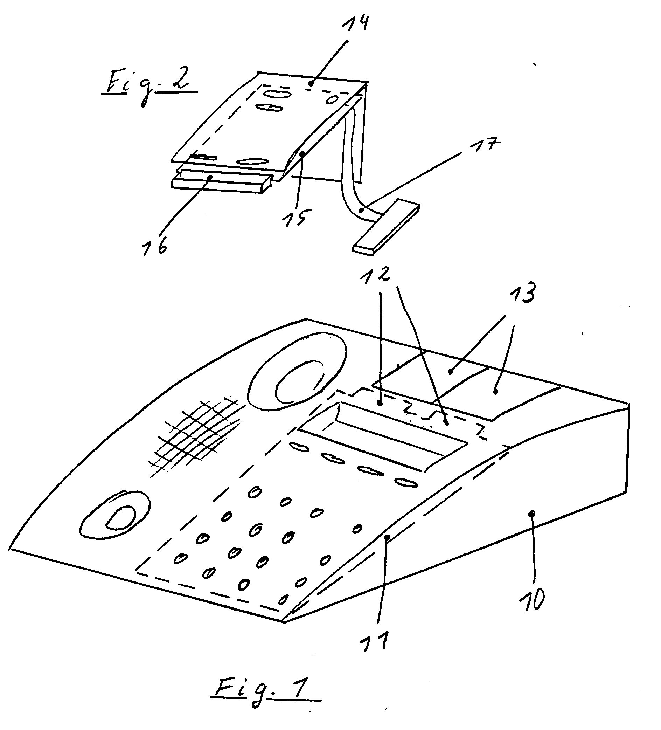

Die Figur 2 zeigt das Beispiel eines Moduls 14 mit zusätzlichen Tasten- und Anzeigeelementen auf einer Leiterplatte 15. Das Modul 14 weist eine gleiche äußere Form wie eine Abdeckung 13 aus. Das Modul 14 wird über die Steckelemente 16 beim Einsetzen anstelle einer Abdeckung 13 mit den Steckelementen 12 der Leiterplatte 11 des Gehäuses 10 elektrisch gekoppelt. Alternativ ist statt der direkten Verbindung zwischen Leiterplatte 11 und Modul 14 auch eine steckbare Kabelverbindung 17 möglich.

Sofern ein Modul 14 ohne Tasten- und Anzeigeelemente als Funktions- und/oder Komforterweiterung eingesetzt wird, weist dieses dieselbe äußere Gestalt wie eine Abdeckung 13 auf, die lediglich mit einer Leiterplatte 15 mit Steckelementen 16 bzw. 17 an der dem Gehäuseinneren zugewandten Seite.

## Patentansprüche

1. Kommunikations-Endgerät mit in seinem Gehäuse untergebrachten Leiterplatten mit Steckelementen zum Anschluß steckbarer Module zur Funktions- und Komforterweiterung, dadurch gekennzeichnet, daß das Gehäuse (10) des Kommunikations-Endgerätes mit austauschbaren Abdeckungen (13) ausgestattet ist, daß die steckbaren Module (14) in ihrer äußeren Gestalt denen der Abdeckungen (13) gleichen und daß die Module (14) anstelle der Abdeckungen (13) in die Kontur des Gehäuses (10) einsetzbar sind.

2. Kommunikations-Endgerät nach Anspruch 1, dadurch gekennzeichnet, daß die austauschbaren Abdeckungen (13) vorzugsweise im oberen, rückwärtigen Bereich des Gehäuses (10) angeordnet sind.

3. Kommunikations-Endgerät nach Anspruch 1, dadurch gekennzeichnet, daß die Module (14) an ihrer dem Gehäuseinneren zugewandten Seite Leiterplatten (15) tragen, die mit Steckelementen (16, 17) versehen sind.

4. Kommunikations-Endgerät nach Anspruch 1 und 4, dadurch gekennzeichnet, daß die Leiterplatten (15) der Module (14) direkte Steckelemente (16) tragen.

5. Kommunikations-Endgerät nach Anspruch 1 und 4, dadurch gekennzeichnet, daß die Leiterplatten (15) der Module (14) Kabelstecker (17) aufweisen.
